# EUROPEAN PATENT SPECIFICATION

(11) **EP 1 880 934 B1**
(45) Date of publication and mention of the grant of the patent: **25.11.2009**
(21) Application number: 07013418.4
(22) Date of filing: 09.07.2007
(51) Int. Cl.: B62K 7/00, F16H 57/04

(54) **Motorcycle**
Motorrad
Motocyclette

(30) Priority: 19.07.2006 JP 2006197300; 21.07.2006 JP 2006199293
(43) Date of publication of application: 23.01.2008
(73) Proprietor: Honda Motor Co., Ltd., Tokyo 107-8556 (JP)
(72) Inventor: Yamanishi, Teruhide, Wako-shi Saitama 351-0193 (JP); Honda, Koichiro, Wako-shi Saitama 351-0193 (JP); Konaka, Junji, Wako-shi Saitama 351-0193 (JP); Watanabe, Satoru, Wako-shi Saitama 351-0193 (JP); Yamanaka, Takasumi, Wako-shi Saitama 351-0193 (JP); Nakatake, Junichi, Wako-shi Saitama 351-0193 (JP); Nizuma, Keichiro, Wako-shi Saitama 351-0193 (JP)
(74) Representative: Liska, Horst

(56) References cited:
- EP-A- 1 433 645
- JP-A- 10 231 759
- JP-A- 60 185 632
- JP-A- 62 203 888
- US-A1- 2006 032 690
- US-B1- 6 492 805

## Description

### Technical Field

The present invention relates to a motorcycle and in particular to a scooter-type motorcycle, in which: a power unit configured by an engine in which a cylinder axis line of an engine body is inclined forward, and a transmission which includes a V-belt-type continuously variable transmission that continuously shifts an output of the engine and which is provided between the engine and a rear wheel is swingably supported by a body frame, and extends rearward to the side of the rear wheel while being continued to the engine body; the rear wheel is journaled to a rear portion of a transmission case accommodating the transmission; and an air cleaner is arranged above the transmission case.

A motorcycle according to the preamble of claim 1 is known from JP 10-231759A.

A further scooter-type motorcycle is well known by JP-B No. H6-33060, in which an air intake duct through which air from outside is introduced to the inside of an air cleaner and another air intake duct through which cooling air from outside is taken in a transmission case are separately provided.

However, in a configuration where different air intake ducts are required for each of the air cleaner and the transmission case as the scooter-type motorcycle disclosed in JP-B No. H6-33060, the number of components is increased, and in addition, it is necessary to secure a relatively large space for arrangement of the air intake ducts.

It is an object of the invention to provide a motorcycle in which air flow from outside into to an air cleaner can be improved.

This object is achieved by a motorcycle according to claim 1.

The invention described in Claim 1 is a motorcycle, in particular of the scooter-type in which: a power unit configured by an engine in which a cylinder axis line of an engine body is inclined forward, and a transmission which includes a V-belt-type continuously variable transmission that continuously shifts an output of the engine and which is provided between the engine and a rear wheel is swingably supported by a body frame, and extends rearward to the side of the rear wheel while being continued to the engine body; the rear wheel is journaled to a rear portion of a transmission case accommodating the transmission; and an air cleaner is arranged above the transmission case, wherein: an outside air introduction duct through which air from outside is introduced to a cooling air introduction port provided in the transmission case in order to cool the V-belt-type continuously variable transmission by using the air from outside is attached to the transmission case; and a passage forming part connected to the air cleaner forms a passage through which air from outside is introduced to an outside air introduction port provided in the air cleaner so as to be open forward, and the passage forming part is formed integrally with the outside air introduction duct.

Furthermore, an air intake port for the air cleaner which is open forward is provided at a front portion of the passage forming part, and the passage is formed in a substantially linear manner from the air intake port for the air cleaner to the outside air introduction port.

In addition to the configuration of the invention described in Claim 1, the invention described in Claim 2 is a motorcycle, wherein an air intake port for the transmission case located below the air intake port for the air cleaner is provided in the outside air introduction duct so as to be open forward.

Further, in addition to the configuration of the invention described in Claim 2, the invention described in Claim 3 is a motorcycle, wherein an opposite wall part located between the cooling air introduction port and the air intake port for the transmission case is provided in the outside air introduction duct while being opposite to the air intake port for the transmission case from the rear.

### Effect of the Invention

According to the invention described in Claim 1, the passage forming part forming a passage through which air from outside is introduced to the outside air introduction port of the air cleaner is formed integrally with the outside air introduction duct attached to the transmission case so as to introduce the air from outside to the inside of the transmission case, and the passage forming part is connected to the air cleaner. Accordingly, while the number of components required for introducing air from outside to the inside of the transmission case and the air cleaner can be reduced, an air intake structure can be simplified, thus reducing a space required therefor.

Furthermore, the flow resistance of air which flows through the passage forming part can be minimized, and the outside air from the front can be effectively introduced to the inside of the air cleaner.

According to the invention described in Claim 2, when the cooling air is taken in the transmission case from outside, an amount by which the outside air introduction duct is overhung to the outer side from the transmission case can be minimized.

Further, according to the invention described in Claim 3, even when a foreign body enters inside the outside air introduction duct from the air intake port for the transmission case which is open forward, the foreign body is prevented from immediately traveling toward the cooling air introduction port of the transmission case, thus preventing the foreign body from hitting the filter element encircling the cooling air introduction port.

### Best Mode for Carrying Out the Invention

Hereinafter, the present invention will be described on the basis of an embodiment of the present invention which is shown in the accompanying drawings.

### Brief Description of the Drawings

Fig. 1 is a left side view of a scooter-type motorcycle according to the invention.
Fig. 2 is a left side view of a power unit and a rear wheel.
Fig. 3 is a cross sectional view taken along the line 3-3 in Fig. 2.
Fig. 4 is a perspective view of a transmission case, an air cleaner, and an outside air introduction duct.
Fig. 5 is a side view of the outside air introduction duct.
Fig. 6 is a cross sectional view taken along the line 6-6 in Fig. 5.

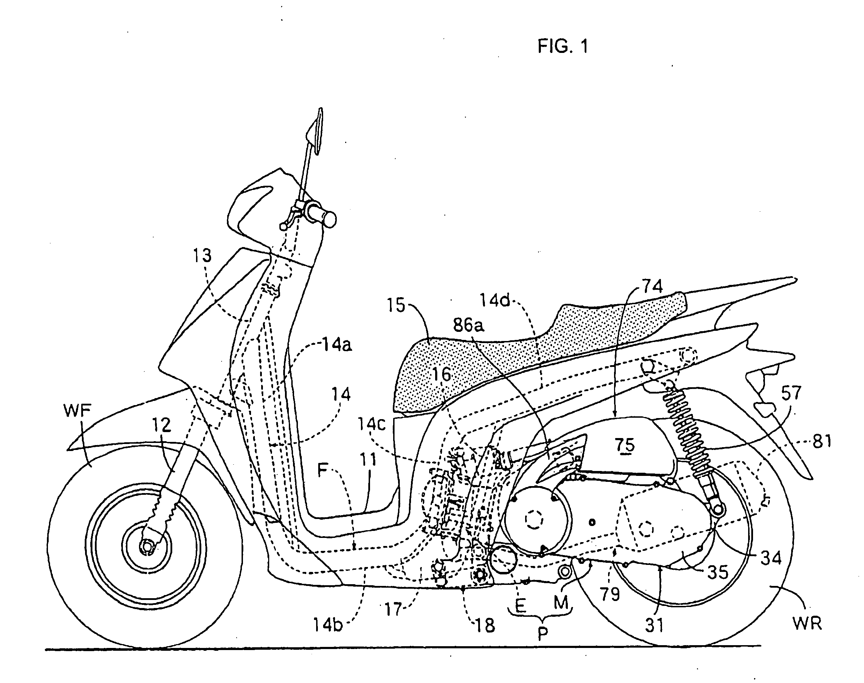

First, in Fig. 1, a body frame F of a scooter-type motorcycle having a low floor 11 includes a head pipe 13 which steerably supports a front fork 12 that journals a front wheel WF, and a pair of left and right side frames 14 whose front end portions are connected to the head pipe 13. Each side frame 14 integrally has a down frame part 14a which suspends downward from the head pipe 13, a lower frame part 14b which is formed in such a manner that it is continued to a lower end of the down frame part 14a, extends to the rear below the floor 11, and a rear-half portion thereof is inclined upward to the rear, a rising frame part 14c which is continued to a rear end of the lower frame part 14b and which rises upward in the rear of the floor 11, and a seat rail part 14d which extends to the rear from a rear end of the rising frame part 14c so as to support a pillion 15. Each side frame 14 is formed by bending a single pipe.

Between rear portions of the lower frame parts 14b and front portions of the seat rail parts 14d of the side frames 14, there are provided rear sub-frames 16 so as to be located below the lower frame parts 14b and in the rear of the rising frame parts 14c of the side frames 14. A pivot plate 17 is provided between the both side frames 14 and the both rear sub-frames 16.

A power unit P composed of an engine E arranged on the front side of the rear wheel WR and a transmission M arranged on the left side of the rear wheel WR is supported by the pivot plate 17 included in the body frame F in a vertically swingable manner through a link mechanism 18, so that the power unit P can vertically swing. The rear wheel WR is journaled to a rear portion of the power unit P.

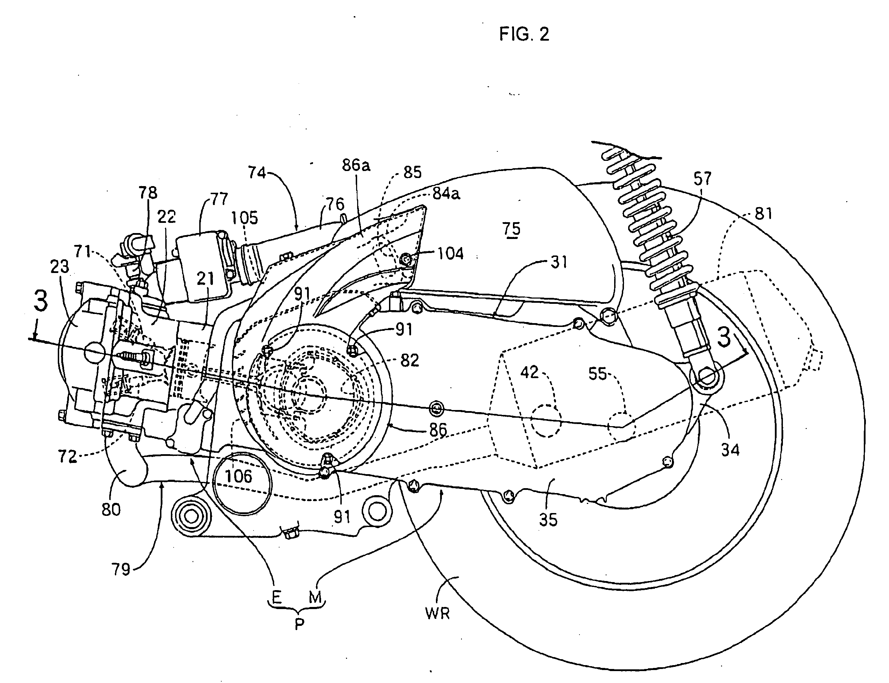

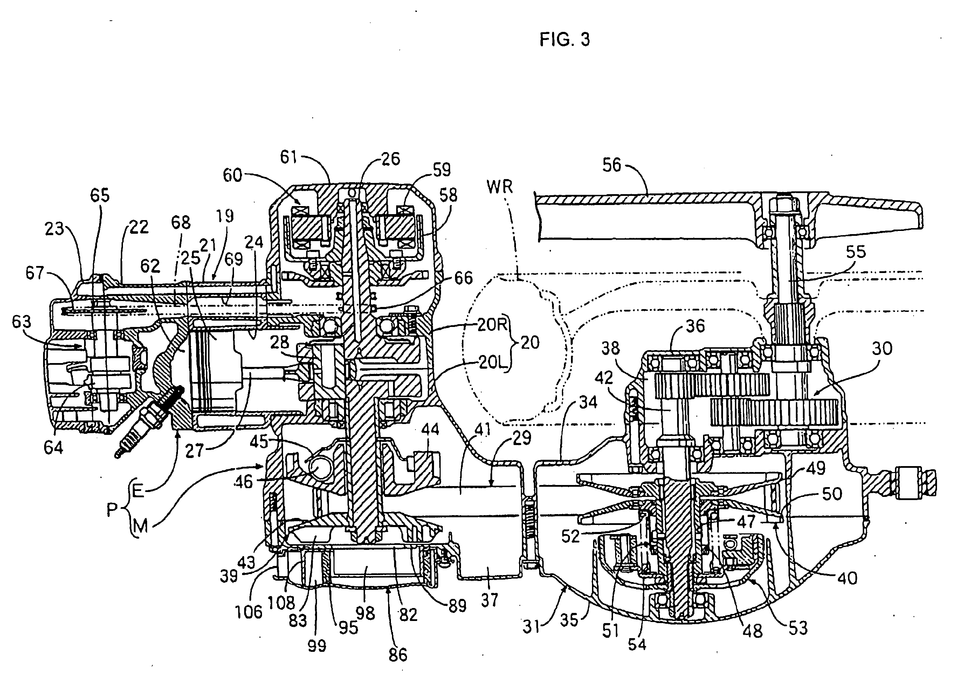

In Figs. 2 and 3, an engine body 19 of the engine E which is a single-cylinder, water-cooled, four-stroke engine includes a crankcase 20 formed by coupling left and right crankcase half bodies 20L and 20R which are divided into two, a cylinder block 21 which is coupled to the crankcase 20, a cylinder head 22 which is coupled to the cylinder block 21, and a head cover 23 which is coupled to the cylinder head 22. A piston 25 is swingably fitted to a cylinder bore 24 which has a cylinder axis line inclined slightly upward to the front and which is provided in the cylinder block 21. A crankshaft 26 extending in the width direction of the body frame F is rotatably supported by the crankcase 20, and the piston 25 is connected to the crankshaft 26 through a connecting rod 27 and a crank pin 28.

The transmission M is configured by a V-belt-type continuously variable transmission 29 and a speed reducing gear train 30 which reduces an output speed from the continuously variable transmission 29 to transmit the reduced speed to the axle of the rear wheel WR, and is continued to the crankcase 20 so as to be accommodated in a transmission case 31 extending in the left direction of the rear wheel WR.

The transmission case 31 is configured by an inner case 34 which is provided integrally with the left crankcase half body 20L of the crankcase 20 while extending to the rear, an outer case 35 which covers the inner case 34 from outside, and a gear case 36 which is coupled to a rear portion of the inner case 34. A transmission chamber 37 accommodating the V-belt-type continuously variable transmission 29 is formed between the inner case 34 and the outer case 35, and a gear chamber 38 accommodating the speed reducing gear train 30 is formed between the inner case 34 and the gear case 36.

The V-belt-type continuously variable transmission 29 is configured by a drive pulley 39 mounted at one end of the crankshaft 26 which protrudes inside the transmission chamber 37 from the crankcase 20, a driven pulley 40 mounted to an output shaft 42 which has an axis line parallel to the crankshaft 26 and which is rotatably supported by the inner case 34, the outer case 35, and the gear case 36, and an endless V belt 41 through which power is transmitted from the drive pulley 39 to the driven pulley 40.

The drive pulley 39 includes a fixed pulley half body 43 fixed to the crankshaft 26 and a movable pulley half body 44 which can be moved close to or apart from the fixed pulley half body 43. The movable pulley half body 44 is driven in the axis direction by a centrifugal force acting on a weight 46 which is arranged between a lamp plate 45 and the movable pulley half body 44, both of which are fixed to the crankshaft 26.

The driven pulley 40 includes an inner cylinder 47 which coaxially encircles the output shaft 42 in a relatively rotating manner, an outer cylinder 48 to which the inner cylinder 47 is swingably fitted so as to enable the relative rotation around the axis line and the relative displacement in the axis line direction, a fixed pulley half body 49 fixed to the inner cylinder 47, a movable pulley half body 50 fixed to the outer cylinder 48 while being opposite to the fixed pulley half body 49, a torque cam mechanism 51 which is provided between the inner cylinder 47 and the outer cylinder 48 so that a component force in the axis direction acts between the fixed pulley half body 49 and the movable pulley half body 50 in accordance with the phase difference of relative rotation between the both pulley half bodies 49 and 50, and a coil spring 52 which resiliently biases the movable pulley half body 50 toward the fixed pulley half body 49. The V belt 41 is wound between the fixed pulley half body 49 and the movable pulley half body 50.

Between the inner cylinder 47 of the driven pulley 40 and the output shaft 42, there is provided a centrifugal clutch 53 which becomes a power transmission state along with an engine speed exceeding a set speed. The coil spring 52 which encircles the outer cylinder 48 is provided in a contracted manner between the movable pulley half body 50 and a driven plate 54 which configures a part of the centrifugal clutch 53 and which is coaxially coupled to the inner cylinder 47 so as not to be relatively rotated.

A distance between the fixed pulley half body 49 and the movable pulley half body 50 in the driven pulley 40 is determined by a balance among a force generated in the axis direction by the torque cam mechanism 51, a spring force generated in the axis direction by the coil spring 52, and a force acting from the V belt 41 in the direction where a distance between the fixed pulley half body 49 and the movable pulley half body 50 is increased. When a radius by which the V belt 41 is wound around the drive pulley 39 becomes large by allowing the movable pulley half body 44 closer to the fixed pulley half body 43 in the drive pulley 39, a radius by which the V belt 41 is wound around the driven pulley 45 becomes small.

One end of an axle 55 of the rear wheel WR air-tightly penetrates the gear case 36 so as to protrude inside the transmission case 30, and is rotatably supported by the inner case 34 and the gear case 36. The speed reducing gear train 30 provided between the output shaft 42 and the axle 55 is accommodated in the gear chamber 38.

A swing arm 56 which is continued to the crankcase 20 of the engine body 19 is arranged on the right side of the rear wheel WR, and the other end of the axle 55 is rotatably supported by a rear portion of the swing arm 56. Further, as shown in Fig. 1, a rear cushion unit 57 is provided between a rear portion of the inner case 34 of the transmission case 30 and a rear portion of the left seat rail part 14d in the body frame F.

Focusing on Fig. 3, an outer rotor 58 is fixed to the other end of the crankshaft 26 which rotatably penetrates the right crankcase half body 20R in the crankcase 20, and an inner stator 59 which is encircled by the outer rotor 58 so as to configure a generator 60 together with the outer rotor 58 is fixed to a right cover 61 fastened to the right crankcase half body 20R so as to cover the generator 60.

Incidentally, a valve mechanism 63 which drives opening and closing of an intake valve 71 (see Fig. 2) that controls air intake to a combustion chamber 62 formed between the cylinder block 21 and the cylinder head 22 with a top portion of the piston 25 and an exhaust valve 72 (see Fig. 2) that controls exhaust from the combustion chamber 62 is accommodated between the cylinder head 22 and the head cover 23, and a cam shaft 64 included in the valve mechanism 63 is supported by the cylinder head 22 so that it can be rotated around the axis line parallel to the crankshaft 26.

The power from the crankshaft 26 is transmitted to the cam shaft 64 with a speed reducing ratio of 1/2 through a timing transmission mechanism 65, and the timing transmission mechanism 65 is configured by a drive sprocket 66 provided to the crankshaft 26 between the right crankcase half body 20R and the generator 60, a driven sprocket 67 fixed to the cam shaft 64, and an endless chain 68 which is wound around the both sprockets 66 and 67. A chain passage 69 through which the chain 68 is allowed to run is provided in the cylinder block 21 and the cylinder head 22.

An air intake system 74 having, at its upstream end, an air cleaner 75 which is arranged above the transmission case 31 and which is supported by the transmission case 31 is connected to an upper side-face of the cylinder head 22 in the engine body 19. The air intake system 74 includes the air cleaner 75, an inlet pipe 76 whose upstream end is connected to the air cleaner 75, a throttle body 77 provided between a downstream end of the inlet pipe 76 and the cylinder head 22. A fuel injection valve 78 through which a fuel is injected into the air measured by the throttle body 77 is attached to the cylinder head 22.

In addition, an exhaust system 79 which is connected to a lower side-face of the cylinder head 22 is connected to a lower portion of the cylinder head 22, and is configured by an exhaust pipe 80 which extends from a right lower portion of the engine body 19 to the right side of the rear wheel WR and an exhaust muffler 81 which is connected to the exhaust pipe 80 and which is arranged on the right side of the rear wheel WR.

Focusing on Fig. 3, an outer face of a portion, of the outer case 35 in the transmission case 31, corresponding to the drive pulley 39 forms a concave part 89 which is concaved inward so as to be open forward and to be vertically open, and a cooling air introduction port 82 through which the V-belt-type continuously variable transmission 29 is cooled by air from outside is provided in the outer case 35 so that the cooling air introduction port 82 is open to the concave part 89. A fan 83 through which air is taken in the transmission chamber 37 from the cooling air introduction port 82 so as to be spread in the transmission chamber 37 is formed integrally with an outer end face of the fixed pulley half body 43 in the drive pulley 39.

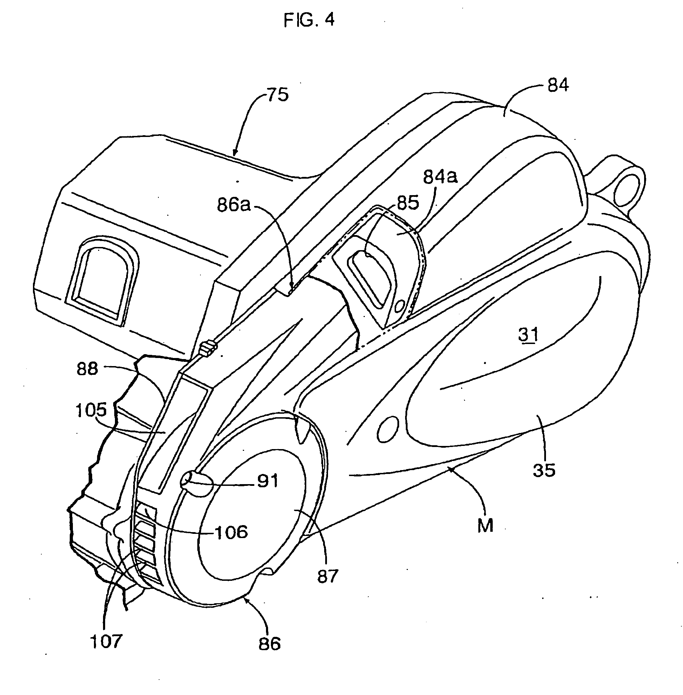

Incidentally, a left outer face of a cleaner case 84 in the air cleaner 75 arranged above the transmission case 31 is located at a position substantially corresponding to a left outer face of the transmission case 31, that is, an outer face of the outer case 35. As shown in Fig.4, a fitting cylinder part 84a whose front end is located rearward with respect to the cooling air introduction port 82 is provided at a front portion of the left outer face of the cleaner case 84. An outside air introduction port 85 through which outside air is introduced inside the air cleaner 75 is provided at a front end of the fitting cylinder part 84a while being open forward.

An outside air introduction duct 86 through which air from outside is introduced to the cooling air introduction port 82 is attached to the outer case 35 in the transmission case 31, and a passage forming part 86a connected to the air cleaner 75 is formed integrally with the outside air introduction duct 86 so that the air from outside is introduced to the outside air introduction port 85 of the air cleaner 75.

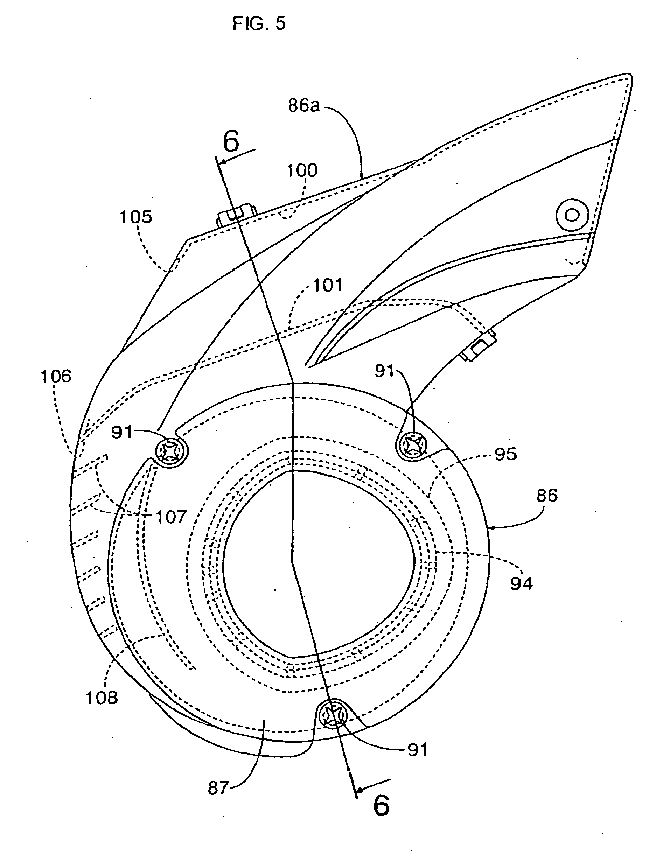

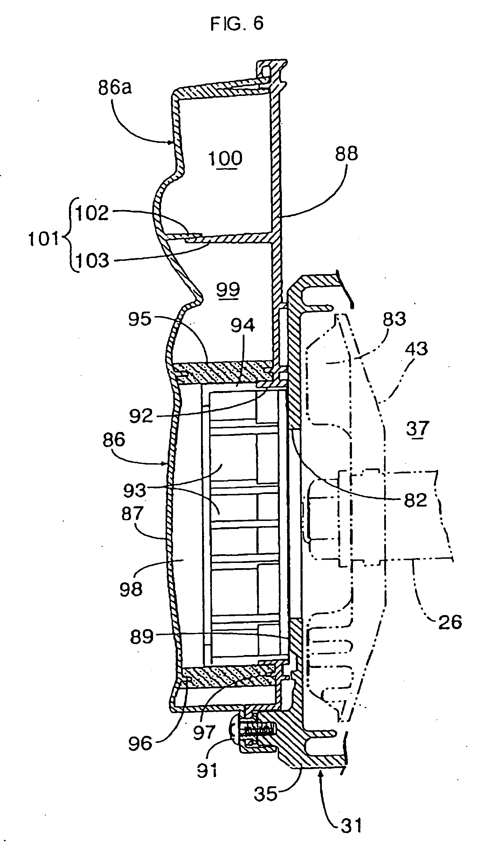

With reference to Figs. 5 and 6 together, the outside air introduction duct 86 is configured by a duct main body 87 which is formed while swelling toward the outer side and a lid plate 88 which is coupled to the duct main body 87 so as to cover an open end of the duct main body 87. The outside air introduction duct 86 is formed, around the cooling air introduction port 82, in a substantially circular shape corresponding to the concave part 89 formed in an outer face of the outer case 35 in the transmission case 31, and is fastened to the concave part 89 so as not to protrude toward the outer side from the transmission case 31. That is, the duct main body 87 and the lid plate 88 configuring the outside air introduction duct 86 are fastened to the outer case 35 by co-fastening using a plurality of, for example, three screw members 91 in a state where the lid plate 88 abuts on a close end of the concave part 89, that is, the outer case 35.

In the outside air introduction duct 86, the lid plate 88 abutting on the outer case 35 is provided with an open part 92 corresponding to the cooling air introduction port 82. A support frame 94 in which a plurality of through-holes 93 are formed with intervals in the circumferential direction encircles the open part 92, and is integrally formed in an inner face of the duct main body 87 with an interval while being opposite thereto. An endless filter element 95 is wound around the support frame 94, and endless support protrusions 96 and 97, each holding the filter element 95 by penetrating and engaging with both ends of the filter element 95, are provided in the duct main body 87 and the lid plate 88, respectively.

By mounting the filter element 95, the outside air introduction duct 86 is partitioned into a purification chamber 98 which is formed inside the filter element 95 while being in communication with the cooling air introduction port 82, and a nonpurification chamber 99 which is located outside the filter element 95.

The passage forming part 86a is extended from the outside air introduction duct 86 toward the air cleaner 75 so that the fitting cylinder part 84a provided at a front portion of a left outer face of the air cleaner 75 is fitted to the passage forming part 86a, and is coupled to the cleaner case 84 by a screw member 104. In the passage forming part 86a, there is formed a passage 100 through which air from outside is introduced to the outside air introduction port 85 of the air cleaner 75, and a bulkhead 101 which separates between the nonpurification chamber 99 and the passage 100 in the outside air introduction duct 86 is formed by wall parts 102 and 103 which are provided on inner faces of the duct main body 87 and the lid plate 88 in a protruding manner so that the tip ends thereof overlap with each other.

At a front portion of the passage forming part 86a, there is provided an air intake port 105 for air cleaner which is open forward, and the passage 100 is formed in a substantially linear manner from the air intake port 105 for air cleaner to the outside air introduction port 85.

At a front portion of the outside air introduction duct 86, there is provided an air intake port 106 for transmission case located below the air intake port 105 for air cleaner so as to be open forward, and a plurality of louver plates 107 are arranged with vertical intervals in the air intake port 106 for transmission case. These louver plates 107 are provided integrally with an inner face of the lid plate 88 in a protruding manner.

Further, in the nonpurification chamber 99 of the outside air introduction duct 86, there is arranged an opposite wall part 108 located between the cooling air introduction port 82 and the air intake port 106 for transmission case, so that the opposite wall part 108 is opposite to the air intake port 106 for transmission case from the rear, and the opposite wall part 108 is also provided integrally with an inner face of the lid plate 88 in a protruding manner.

Next, the effects of the embodiment will be described. The outside air introduction duct 86 through which air from outside is introduced to the cooling air introduction port 82 provided in the transmission case 31 in order to cool the V-belt-type continuously variable transmission 29 in the transmission case 31 by using the air from outside is attached to the outer case 35 of the transmission case 31. The passage forming part 86a connected to the air cleaner 75 forms the passage 100 through which air from outside is introduced to the outside air introduction port 85 provided in the air cleaner 75 so as to be open forward, and the passage forming part 86a is formed integrally with the outside air introduction duct 86. Accordingly, while the number of components required for introducing air from outside to the inside of the transmission case 31 and the air cleaner 75 can be reduced, an air intake structure can be simplified, thus reducing a space required therefor. In addition, a left outer face of the transmission case 31 is located at a position substantially corresponding to that of the air cleaner 75 in the embodiment. Therefore, by forming the passage forming part 86a on substantially the same plane as the outside air introduction duct 86, the shapes of the outside air introduction duct 86 and the passage forming part 86a can be further simplified.

The air intake port 105 for air cleaner which is open forward is provided at a front portion of the passage forming part 86a, and the passage 100 in the passage forming part 86a extends in a substantially linear manner from the air intake port 105 for air cleaner to the outside air introduction port 85 of the air cleaner 75. Accordingly, the flow resistance of air which flows through the passage forming part 86a can be minimized, and the outside air from the front can be effectively introduced to the inside of the air cleaner 75.

In addition, the air intake port 106 for transmission case located below the air intake port 105 for air cleaner is provided in the outside air introduction duct 86 so as to be open forward. Accordingly, when the cooling air is taken in the transmission case 31 from outside, an amount by which the outside air introduction duct 86 is overhung to the outer side from the transmission case 31 can be minimized.

Further, the opposite wall part 108 located between the cooling air introduction port 82 and the air intake port 106 for transmission case is provided in the outside air introduction duct 86 while being opposite to the air intake port 106 for transmission case from the rear. Accordingly, even when a foreign body enters inside the outside air introduction duct 86 from the air intake port 106 for transmission case which is open forward, the opposite wall part 108 prevents the foreign body from immediately traveling toward the cooling air introduction port 82 of the transmission case 31, thus preventing the foreign body from hitting the filter element 95 encircling the cooling air introduction port 82.

The present invention is not limited to the above-described embodiment, but may be configured in such a manner that, for example, the engine and the power transmission mechanism (the transmission case) can be relatively swingable and only the transmission case is swingably supported by the body frame.

In addition, the configuration in the embodiment is an example of the present invention. It is obvious that the invention can be applied to not only a motorcycle but also to a three-wheeled or four-wheeled vehicle, and various modifications can be made without departing from the scope of the invention.

## Claims

1. A motorcycle, in particular of the scooter-type in which: a power unit (P) configured by an engine (E) in which a cylinder axis line of an engine body (19) is inclined forward, and a transmission (M) which includes a V-belt-type continuously variable transmission (29) that continuously shifts an output of the engine (E) and which is provided between the engine (E) and a rear wheel (WR) is swingably supported by a body frame (F), and extends rearward to the side of the rear wheel while being continued to the engine body (19); the rear wheel (WR) is journaled to a rear portion of a transmission case (31) accommodating the transmission (M); and an air cleaner (75) is arranged next to the transmission case (31),
wherein: an outside air introduction duct (86) through which air from outside is introduced to a cooling air introduction port (82) provided in the transmission case (31) in order to cool the V-belt-type continuously variable transmission (29) by using the air from outside is attached to the transmission case (31); and a passage forming part (86a) connected to the air cleaner (75) forms a passage (100) through which air from outside is introduced to an outside air introduction port (85) provided in the air cleaner (75) so as to be open forward, and the passage forming part being formed integrally with the outside air introduction duct (86),
**characterized in that**
the air cleaner (75) is arranged above the transmission case (31) and
an air intake port (105) for the air cleaner (75) which is open forward is provided at a front portion of the passage forming part (86a), and the passage (100) is formed in a substantially linear manner from the air intake port (105) for the air cleaner to the outside air introduction port (85).

2. The motorcycle according to Claim 1,
wherein an air intake port (106) for the transmission case located below the air intake port (105) for the air cleaner is provided in the outside air introduction duct (86) so as to be open forward.

3. The motorcycle according to Claim 2,
wherein an opposite wall part (108) located between the cooling air introduction port (82) and the air intake port (106) for the transmission case is provided in the outside air introduction duct (86) while being opposite to the air intake port (106) for the transmission case from the rear.

## Patentansprüche

1. Kraftrad, insbesondere vom Scooter-Typ, bei dem: eine Antriebseinheit (P), welche gebildet ist von einem Motor (E), bei dem eine Zylinderachslinie von einem Motorkörper (19) nach vorne geneigt ist, und einem Getriebe (M), welches ein stufenlos verstellbares Getriebe vom Keilriementyp (29) umfasst, welches eine Ausgabe von dem Motor (E) stufenlos schaltet und welches zwischen dem Motor (E) und einem Hinterrad (WR) vorgesehen ist, schwenkbar von einem Rumpfrahmen (F) gelagert ist und sich rückwärts zu der Seite von dem Hinterrad erstreckt während sie sich zu dem Motorkörper (19) fortsetzt; das Hinterrad (WR) an einem hinteren Abschnitt von einem Getriebegehäuse (31) gelagert ist, welches das Getriebe (M) aufnimmt; und ein Luftfilter (75) neben dem Getriebegehäuse (31) angeordnet ist,
wobei: ein Außenlufteinleitkanal (86), durch welchen Luft von der Außenseite her zu einer Kühllufteinleitöffnung (82) eingeleitet wird, welche in dem Getriebegehäuse (32) vorgesehen ist, um das stufenlos verstellbare Getriebe vom Keilriementyp (29) unter Verwendung der Luft von der Außenseite zu kühlen, an dem Getriebegehäuse (31) angebracht ist; und ein Durchgangsbildungsteil (86a), welches mit dem Luftfilter (75) verbunden ist, einen Durchgang (100) bildet, durch welchen Luft von der Außenseite zu einer Außenlufteinleitöffnung (85) eingeleitet wird, welche in dem Luftfilter (75) derart vorgesehen ist, dass sie nach vorne hin offen ist, und das Durchgangsbildungsteil integral mit dem Außenlufteinleitkanal (86) ausgebildet ist,
**dadurch gekennzeichnet, dass**
der Luftfilter (75) oberhalb des Getriebegehäuses (31) angeordnet ist; und eine nach vorne hin offene Lufteinleitöffnung (105) für den Luftfilter (75) an einem vorderen Abschnitt von dem Durchgangsbildungsteil (86a) vorgesehen ist und der Durchgang (100) in einer im Wesentlichen geradlinigen Weise von der Lufteinleitöffnung (105) für den Luftfilter zu der Außenlufteinleitöffnung (85) ausgebildet ist.

2. Kraftrad nach Anspruch 1, wobei eine Lufteinleitöffnung (106) für das Getriebegehäuse, welche unterhalb der Lufteinleitöffnung (105) für den Luftfilter angeordnet ist, derart in dem Außenlufteinleitkanal (86) vorgesehen ist, dass sie nach vorne hin offen ist.

3. Kraftrad nach Anspruch 2, wobei ein gegenüberliegendes Wandteil (108), welches zwischen der Kühllufteinleitöffnung (82) und der Lufteinleitöffnung (106) für das Getriebegehäuse angeordnet ist, in dem Außenlufteinleitkanal (86) vorgesehen ist, während es der Lufteinleitöffnung (106) für das Getriebegehäuse von der Rückseite her gegenüberliegt.

## Revendications

1. Motocyclette, en particulier du type scooter, dans laquelle : une unité de puissance (P) configurée par un moteur (E) dans laquelle une ligne axiale de cylindre d'une caisse de moteur (19) est inclinée vers l'avant, et une transmission (M) qui comprend une transmission à variation continue (29) du type à courroie en V qui déplace de manière continue une sortie du moteur (E) et qui est prévue entre le moteur (E) et une roue arrière (WR) est supportée de manière pivotante par un châssis de caisse (F) et s'étend vers l'arrière du côté de la roue arrière tout en continuant vers le corps de moteur (19) ; la roue arrière (WR) est entraînée en rotation sur une partie arrière d'un carter de transmission (31) logeant la transmission (M) ; et un filtre à air (75) est agencé à côté du carter de transmission (31),
dans laquelle un conduit d'introduction d'air externe (86) à travers lequel l'air provenant de l'extérieur est introduit dans un orifice d'introduction d'air de refroidissement (82) prévu dans le carter de transmission (31) afin de refroidir la transmission à variation continue (29) de type à courroie en V en utilisant l'air provenant de l'extérieur, est fixé au carter de transmission (31) ; et une partie de formation de passage (86a) raccordée au filtre à air (75) forme un passage (100) à travers lequel l'air provenant de l'extérieur est introduit dans un orifice d'introduction d'air externe (85) prévu dans le filtre à air (75) afin d'être ouvert vers l'avant, et la partie de formation de passage étant formée de manière solidaire avec le conduit d'introduction d'air externe (86),
**caractérisée en ce qui :**
le filtre à air (75) est agencé au-dessus du carter de transmission (31), et
un orifice d'admission d'air (105) pour le filtre à air (75) qui est ouvert vers l'avant, est prévu au niveau d'une partie avant de la partie de formation de passage (86a), et le passage (100) est formé d'une manière sensiblement linéaire à partir de l'orifice d'admission d'air (105) pour le filtre à air jusqu'à l'orifice d'introduction d'air externe (85).

2. Motocyclette selon la revendication 1, dans laquelle un orifice d'admission d'air (106) pour le carter de transmission situé au-dessous de l'orifice d'admission d'air (105) pour le filtre à air est prévu dans le conduit d'introduction d'air externe (86) afin d'être ouvert vers l'avant.

3. Motocyclette selon la revendication 2, dans laquelle une partie de paroi opposée (108) située entre l'orifice d'introduction d'air de refroidissement (82) et l'orifice d'admission d'air (106) pour le carter de transmission est prévue dans le conduit d'introduction d'air externe (86) tout en étant opposée à l'orifice d'admission d'air (106) pour le carter de transmission à partir de l'arrière.
